# EUROPÄISCHE PATENTSCHRIFT

(11) **EP 0 653 571 B1**
(45) Veröffentlichungstag und Bekanntmachung des Hinweises auf die Patenterteilung: **09.04.1997**
(21) Anmeldenummer: 93117011.2
(22) Anmeldetag: 21.10.1993
(51) Int. Cl.: F16B 37/06

(54) **Blechmutter zur Blindbefestigung**
Sheet metal nut for blind fastening
Ecrou en tôle pour fixation aveugle

(43) Veröffentlichungstag der Anmeldung: 17.05.1995
(73) Patentinhaber: A. Raymond & Cie, F-38028 Grenoble-Cédex (FR)
(72) Erfinder: Barnavol, Charles, F-38100 Grenoble (FR)
(74) Vertreter: Kirchgaesser, Johannes, Dipl.-Ing.

(56) Entgegenhaltungen:
- EP-A- 0 288 868
- EP-A- 0 494 747
- GB-A- 438 011
- US-A- 2 429 833

## Beschreibung

Die Erfindung bezieht sich auf eine Blechmutter zur Blindbefestigung in einem Loch einer Trägerplatte. Die Blechmutter besteht hierbei aus einer Kopfplatte zur Auflage auf dem Rand eines Durchgangslochs in der Trägerplatte mit einer Aussparung zum Durchführen einer Schraube und einer im Abstand von der Kopfplatte angeordneten Gewindehülse, welche mit der Kopfplatte durch nach außen klappbare Verbindungsstege verbunden ist, wobei die das Durchgangsloch überdeckende Kopfplatte aus mehreren Teilen besteht, welche an den Enden der Verbindungsstege angeformt und nach Ein -und Auswärtsknicken der Verbindungsstege zusammen geführt sind.

Derartige Blechmuttern bieten den Vorteil, daß nach dem Einsetzen der Gewindehülse in das Durchgangsloch die Verbindungsstege beim Eindrehen der Schraube in ihrer Mitte nach außen klappen und dann auf der Rückseite der Trägerplatte am Rand des Durchgangsloches fest anlegen, so daß die Blechmutter mit einer großen Haltekraft in der Trägerplatte verankert ist.

Aus GB-A-438.011 ist eine derartige Blechmutter bekannt, bei der die Basisplatte mit an sechs Seiten abstehenden Verbindungsstegen und mit an den Enden der Verbindungsstegen angeformten Kopfplattenteilen gemeinsam aus einer Platine herausgestanzt, die Verbindungsstege etwa rechtwinklig nach der gleichen Seite herumgebogen und die Kopfplattenteile an ihren Enden auswärts geknickt sind. Die Basisplatte hat ein hexagonales Loch in dem eine separate Mutter eingesetzt ist, die mit einer umlaufenden Rille versehen ist. Diese Blechmutter erfordert zur Herstellung wegen der strahlenförmigen Anordnung der Verbindungsstege einen entsprechend breiten Blechstreifen und ergibt daher auch verhältnismäßig viel Stanzabfall. Da außerdem noch eine von der Norm abweichende Spezialmutter zum Einsatz kommt und diese in einem besonderen Arbeitsgang montiert werden muß, ist die bekannte Blechmutter für ein Massenprodukt in der Herstellung sehr teuer.

Aufgabe der Erfindung ist es, die vorliegende Blechmutter so zu gestalten, daß diese ohne Beeinträchtigung der Haltewirkung wesentlich einfacher geformt und somit auch billiger herzustellen ist.

Diese Aufgabe wird bei der vorliegenden Blechmutter erfindungsgemäß dadurch gelöst, daß die Gewindehülse mit der Kopfplatte und den Verbindungsstegen aus einer langgestreckten Platine einstückig geformt ist, und die Kopfplatte aus zwei Hälften besteht.

Hierdurch läßt sich die komplette Blechmutter in einem Stück aus einem verhältnismäßig schmalen Blechstreifen herstellen, was naturgemäß mit einer erheblichen Reduzierung der Produktionskosten verbunden ist.

In den Unteransprüchen sind weitere, für die Erfindung förderliche Merkmale angegeben, wobei durch die Ausbildung der Blechmutter nach Anspruch 2 eine optimale Abstützung der geteilten Kopfplatte im Loch der Trägerplatte gewährleistet ist und durch die Merkmale nach Anspruch 3 eine weitere Vereinfachung für die Platinenausstanzung aufgezeigt wird. Mit der Stützlappenausbildung nach Anspruch 4 wird schließlich eine saubere Auflage der Gewindehülse auf den zusammengeklappten Verbindungsstegen bezweckt, und zwar nach deren Anlage am Rand des Befestigungsloches.

In der Zeichnung ist ein Ausführungsbeispiel der Erfindung dargestellt, welches nachfolgend näher erläutert werden soll. Es zeigt
- Fig. 1: die Blechmutter in Seitenansicht,
- Fig. 2: die Blechmutter in Vorderansicht,
- Fig. 3: die Blechmutter in Draufsicht,
- Fig. 4: die gestreckte Platine zur Herstellung der Blechmutter nach dem Ausstanzen und vor dem Ausformen,
- Fig. 5: die im Loch einer Trägerplatte eingesetzte Blechmutter beim Eindrehen einer Schraube und
- Fig. 6: die eingesetzte Blechmutter nach dem Eindrehen der Schraube.

Die in den Figuren dargestellte Blechmutter dient zur Blindbefestigung in einem Loch einer Trägerplatte und ist aus einem zusammenhängenden Blechstreifen hergestellt.

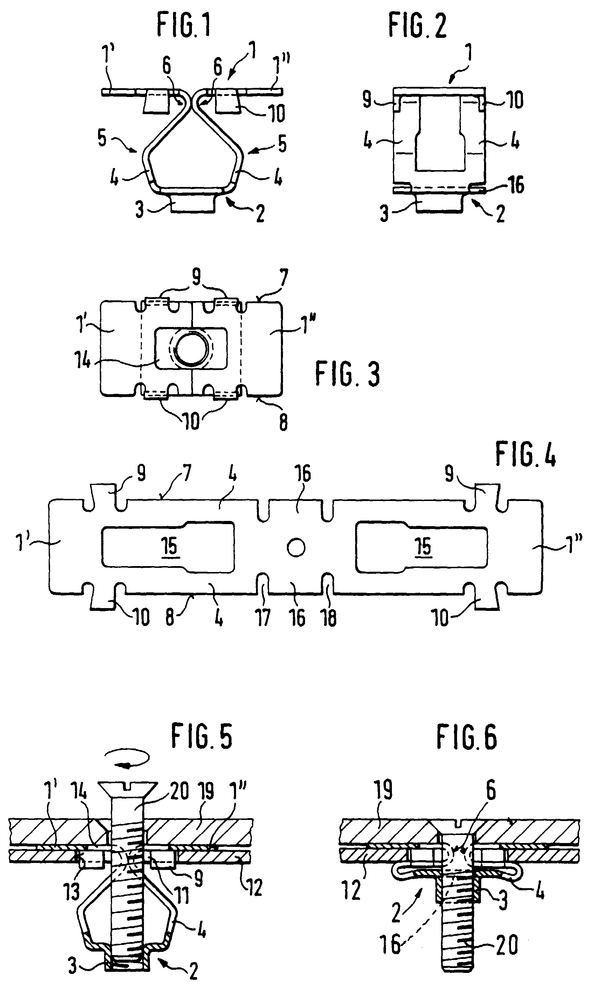

Die Blechmutter besteht in ihrer fertig gebogenen Form gemäß den Figuren 1-3 aus einer Kopfplatte 1 und einer Basisplatte 2 mit einer integrierten Gewindehülse 3, welche mit der Kopfplatte 1 im Abstand von dieser über nach außen klappbare Verbindungsstege 4 verbunden ist. Die Kopfplatte 1 ist hierbei aus zwei Hälften 1' und 1'' zusammengesetzt, welche, wie aus Figur 4 ersichtlich, an den von der Gewindehülse 3 entfernten Enden der Verbindungsstege 4 angeformt sind.

Die beiden Kopfplattenhälften 1' und 1'' werden nach dem Ausstanzen der Platine aus dem Blechstreifen zusammengeführt, indem die Verbindungsstege 4 zunächst unter einem Winkel kleiner 90°, beispielsweise 75 - 80°, nach der gleichen Seite hochgebogen werden.

Sodann werden die Verbindungsstege 4 an der Knickstelle 5 umgebogen und bis zur Berührung bei der zweiten Knickstelle 6 schräg zusammengeführt, wobei die Kopfplattenhälften 1' und 1'' gleichzeitig in entgegengesetzter Richtung derart weggebogen werden, daß die sich ergebende Platte 1 parallel zur Basisplatte 2 verläuft.

An den Kopfplattenhälften 1' und 1'' sind beiderseits der Längskanten 7 und 8 bei der ausgestanzten Platine seitlich abstehende Lappen 9 und 10 angeformt, die im Fertigzustand der Blechmutter derart zur Gewindehülse 3 hingebogen sind, daß diese Lappen 9 und 10 genau in die Ecken des Loches 11 in der Trägerplatte 12 eintauchen und sich dort abstützen, so daß die Blechmutter im Loch 11 gegen Verdrehung gesichert ist.

Wie aus Figur 4 hervorgeht, ergeben sich die Verbindungsstege 4 durch Ausstanzen von Zwischenräumen 15, wobei die Endbereiche dieser Zwischenräume 15 im zusammengeführten Zustand der Verbindungsstege 4 bis in die Kopfplattenteile 1' und 1'' hineinreichen und dort eine Aussparung 14 zum Durchführen der Befestigungsschraube 20 bilden.

Zwischen der Basisplatte 2 und den Verbindungsstegen 4 sind von der Seite her Schlitze 17 und 18 in die Platine eingestanzt. Dadurch ergeben sich zwischen den Schlitzten 17 und 18 querabstehende Stützlappen 16, die sich beim Anziehen der Gewindehülse 3 bei 6 auf den abgeknickten Enden der Verbindungsstege 4 auflegen (Figur 6).

Die Wirkungsweise der erfindungsgemäßen Blechmutter ist in den Figuren 5 und 6 anschaulich dargestellt. In Figur 5 ist die Blechmutter in das Loch 11 der Trägerplatte 12 eingesetzt. Ferner ist ein auf die Kopfplatte 1 der Blechmutter aufgelegtes, flaches Bauteil 19 angedeutet, welches mit der Schraube 20 an der Trägerplatte 12 verankert werden soll.

Figur 6 zeigt den fertigen Montagezustand nach dem Eindrehen der Schraube 20, wobei die Verbindungsstege 4 aufeinandergezogen sind und die Stützlappen 16 der Gewindehülse 3 auf den an der Kopfplatte 1 abgeknickten Enden der Verbindungsstege 4 an der Knickstelle 6 fest aufliegen, so daß sich eine hohe Anzugskraft ergibt.

Es versteht sich, daß anstelle der Gewindehülse 3 auch ein Gewindeeindruck für Blechschrauben in die Basisplatte 2 integriert werden kann.

## Patentansprüche

1. Blechmutter zur Blindbefestigung in einem Loch einer Trägerplatte, bestehend aus einer Kopfplatte (1) zur Auflage auf dem Rand eines Durchgangslochs (11) in der Trägerplatte (12) mit einer Aussparung (14) zum Durchführen einer Schraube (20) und einer im Abstand von der Kopfplatte (1) angeordneten Gewindehülse (3), welche mit der Kopfplatte (1) durch nach außen klappbare Verbindungsstege (4) verbunden ist, wobei die das Durchgangsloch (11) überdeckende Kopfplatte (1) aus mehreren Teilen ( 1',1") besteht, welche an den Enden der Verbindungsstege (4) angeformt und nach Ein- und Auswärtsknicken der Verbindungsstege (4) zusammengeführt sind, **dadurch gekennzeichnet**, daß die Gewindehülse (3) mit der Kopfplatte (1) und den Verbindungsstegen (4) aus einer langgestreckten Platine einstückig geformt ist, und die Kopfplatte (1) aus zwei Hälften (1', 1") besteht.

2. Blechmutter nach Anspruch 1, dadurch gekennzeichnet, daß an den Kopfplattenhälften (1', 1") beiderseits der Längskanten (7, 8) Lappen (9, 10) angeformt und derart zur Gewindehülse (3) gebogen sind, daß diese Lappen (9, 10) in das Loch (11) der Trägerplatte (12) eintauchen und sich am Lochrand (13) abstützen können.

3. Blechmutter nach Anspruch 1 oder 2, dadurch gekennzeichnet, daß jede Hälfte der Kopfplatte jeweils durch zwei Verbindungsstege (4) mit der Gewindehülse verbunden ist und die Aussparung (14) zum Durchführen der Schraube sich am Ende des Zwischenraumes (15) zwischen den beiden Verbindungsstegen (4) befindet.

4. Blechmutter nach Anspruch 2, dadurch gekennzeichnet, daß von der Basisplatte (2) der Gewindehülse (3) quer zur Längsrichtung zwei Stützlappen (16) abstehen, die sich beim Anziehen der Gewindehülse (3) auf den an der Kopfplatte (1) abgeknickten Enden der Verbindungsstege (4) auflegen.

## Claims

1. A sheet metal nut for blind fastening in a hole in a carrier plate, comprising a head plate (1) for resting on the edge of a through hole (11) in the carrier plate (12) having an opening (14) for a screw (12) to pass therethrough and a screwthreaded sleeve portion (3) which is arranged at a spacing from the head plate (1) and which is connected to the head plate (1) by outwardly foldable connecting limbs (4), wherein the head plate (1) which covers over the through hole (11) comprises a plurality of parts (1', 1") which are formed on the ends of the connecting limbs (4) and are brought together after inward and outward folding of the connecting limbs (4), characterised in that the screwthreaded sleeve portion (3) is formed in one piece with the head plate (1) and the connecting limbs (4) from an elongated plate and the head plate (1) comprises two halves (1', 1").

2. A sheet metal nut according to claim 1 characterised in that lugs (9, 10) are formed on the head plate halves (1', 1") at both sides of the longitudinal edges (7, 8) and are bent towards the screwthreaded sleeve portion (3) in such a way that said lugs (9, 10) can engage into the hole (11) in the carrier plate (12) and bear against the hole edge (13).

3. A sheet metal nut according to claim 1 or claim 2 characterised in that each half of the head plate is connected to the screwthreaded sleeve portion by respective two connecting limbs (4) and the opening (14) for the screw to pass therethrough is disposed at the end of the intermediate space (15) between the two connecting limbs (4).

4. A sheet metal nut according to claim 2 characterised in that projecting from the base plate (2) of the screwthreaded sleeve portion (3) transversely to the longitudinal direction are two support lugs (16) which, when the screwthreaded sleeve portion (3) is tightened, bear against the ends of the connecting limbs (4) which are bent away at the head plate (1).

## Revendications

1. Écrou en tôle pour fixation aveugle dans un trou d'une plaque support, se composant d'une plaque formant tête (1) destinée à être appliquée sur le bord d'un trou débouchant (11) ménagé dans la plaque support (12) avec un évidement (14) pour le passage d'une vis (20) et d'une douille filetée (3) disposée espacée de la plaque formant tête (1), qui est reliée à la plaque formant tête (1) par des barrettes entretoises de liaison rabattables (4), la plaque formant tête (1) recouvrant le trou débouchant (11) se composant en l'occurrence de plusieurs parties (1', 1") qui sont réalisées solidaires par formage des extrémités des barrettes entretoises de liaison (4) et qui, après le pliage vers l'intérieur et vers l'extérieur des barrettes entretoises de liaison (4) sont refermées par rapprochement, caractérisé en ce que la douille filetée (3) est réalisée par formage, à partir d'un flan de grande longueur, sous la forme d'une seule pièce avec la plaque formant tête (1) et les barrettes entretoises de liaison (4) et en ce que la plaque formant tête (1) se compose de deux moitiés (1', 1").

2. Écrou en tôle selon la revendication 1, caractérisé en ce que des pattes (9, 10) sont réalisée solidaires par formage sur les deux moitiés de la plaque formant tête (1', 1") de part et d'autre des arêtes longitudinales (7, 8) et sont repliées en direction de la douille filetée (3) dans des conditions telles que ces pattes (9,10) peuvent plonger dans le trou (11) de la plaque support (12) et prendre appui contre le bord du trou (13).

3. Écrou en tôle selon la revendication 1 ou 2, caractérisé en ce que chacune des moitiés de la plaque formant tête est reliée respectivement par deux barrettes entretoises de liaison (4) avec la douille filetée et en ce que l'évidement (14) pour le passage de la vis se trouve à l'extrémité de l'intervalle (15) entre les deux barrettes entretoises de liaison (4).

4. Écrou en tôle selon la revendication 2, caractérisé en ce que, partant de la plaque de base (2) de la douille filetée (3), deux pattes d'appui (16) font saillie transversalement par rapport au sens longitudinal, qui, lors du serrage de la douille filetée (3) s'appliquent sur les extrémités, repliées au niveau de la plaque formant tête, des barrettes entretoises de liaison (4).
